# EUROPÄISCHE PATENTANMELDUNG

(11) **EP 0 697 495 A2**
(43) Veröffentlichungstag der Anmeldung: **21.02.1996**
(21) Anmeldenummer: 95111465.1
(22) Anmeldetag: 20.07.1995
(51) Int. Cl.: E21B 21/02, E21C 7/02, E21C 7/04

(54) **Vorrichtung zum Absaugen von Bohrklein**

(30) Priorität: 01.08.1994 DE 4427149
(71) Anmelder: FRIEDRICH DUSS MASCHINENFABRIK GMBH & CO., D-75387 Neubulach (DE)
(72) Erfinder: Schroth, Gerhard, D-75387 Neubulach (DE)
(74) Vertreter: Reinhardt, Harry

(57) **Zusammenfassung**

Ein Bohrwerkzeug für Bohrhämmer besitzt einen Bohrkopf, der über einen Bohrschaft mit dem Einsteckende des Bohrwerkzeugs in Verbindung steht. Koaxial zum Bohrschaft (12) ist ein Hüllrohr (13) vorgesehen, wobei zwischen Hüllrohr (13) und Bohrschaft (12) ein Raum (17) gebildet wird zum Absaugen von beim Bohren entstehenden Bohrklein, der einsteckseitig nahezu verschlossen ist und in ein Anschlußelement (14) zum Anschluß eines Saugmittels übergeht. Dadurch, daß das Hüllrohr (13) mit wenigstens zwei Zentriermitteln zusammenfügbar ist, die unmittelbar am unveränderten Bohrschaft selbst zentriert sind, wird kostengünstig die Lebensdauer und die Einsatzmöglichkeit des Bohrwerkzeuges vergrößert.

## Beschreibung

Die Erfindung betrifft ein Bohrwerkzeug, insbesondere für Bohrhämmer zum Bohren in Beton, Mauerwerk und dergleichen nach dem Oberbegriff des Anspruches 1.

Bei einem derartigen Bohrwerkzeug nach der DE-A 26 45 693, Fig. 1 und 2 ist anstelle eines Spiralbohrers ein Bohrschaft vorgesehen, der koaxial von einem Rohr umschlossen ist, das einteilig mit einer Saughaube und einem Saugkopf ist. Die Saughaube erstreckt sich bis in den Bereich des eigentlichen Bohrkopfes und tritt geringfügig hinter die außen stehenden Schneiden zurück. Das aus Kunststoff bestehende Rohr selbst stützt sich einerseits unmittelbar am Bohrkopf ab, andererseits greift es zur axialen Festlegung mit einer Verrastung in eine den Querschnitt des Bohrschafts schwächende Ausnehmung desselben ein. Gesonderte Zentriermittel zur Zentrierung des Rohrs am Bohrschaft sind nicht vorgesehen. Im Bohrloch kann Luft entlang der Außenseite des Rohres in die Bohrung einstreichen, die über einen Ansaugstutzen im Bereich des Saugkopfes und über Ansaugöffnungen im Bereich des Bohrkopfes einschließlich des anfallenden Bohrkleins wieder abgesaugt wird. Diese Ausbildung hat gegenüber Spiralbohren zwar den Vorteil einer höheren Bohrleistung, eines geringeren Verschleißes am Werkzeug, eines besseren Bohrkomforts und läßt sich vor allem auch im Innenbereich problemlos einsetzen, da kein Staub anfällt, jedoch ist es durch die einstückige Ausbildung sämtlicher Teile der Absaugvorrichtung erforderlich, für jeden Bohrer ein geeignetes Hüllrohr vorzusehen, was die Kosten des einzelnen Bohrwerkzeuges verteuert. Da zudem das Rohr aus Kunststoff hergestellt ist, ist es einem starken Verschleiß unterworfen, zumal es sich unmittelbar am Bohrkopf selbst zentriert. Alternativ kann der Saugkopf als gesondertes Anschlußelement auch frei beweglich auf einem drehfest montierten Hüllrohr angeordnet sein. Dies führt jedoch zu einem zusätzlichen Verschleiß im Übergangsbereich zwischen diesen beiden Elementen.

Ebenfalls aus der DE-A 26 45 693, Figuren 6 und 7 ist ein verlängerbarer Bohrschaft bekannt, der grundsätzlich denselben Außendurchmesser wie die peripheren Schneiden des Bohrkopfes aufweist. Das Hüllrohr kann hierbei durch Steckverbindungen verlängert werden, die jedoch aufgrund der unmittelbaren Abstützung am Bohrkopf stark beansprucht sind. Bei einer derartigen Ausbildung tritt zudem das Problem auf, daß die einstreichende Luft an der Außenwandung des Bohrloches kaum eintreten kann, so daß das Bohrklein nur mit Mühe abgesaugt werden kann.

Ausgehend von diesem Stand der Technik liegt der vorliegenden Erfindung die Aufgabe zugrunde, ein Bohrwerkzeug der eingangs genannten Gattung derart weiterzubilden, daß auf kostengünstige Weise die Lebensdauer und die Einsatzmöglichkeit des Bohrwerkzeuges vergrößert wird.

Diese Aufgabe wird durch die Merkmale des Anspruches 1 gelöst.

Durch diese Ausgestaltung werden die grundsätzlichen Voraussetzungen für ein Baukastenprinzip geschaffen, das aus einem einfachen Rohr, einem gleichbleibenden Saugkopf als Anschlußelement für Saugmittel zum Absaugen des Bohrkleins und einer bedarfsweise veränderlichen Saughaube besteht. Saughaube und Anschlußelement können dabei auch mehrteilig ausgebildet werden, um die auf Verschleiß beanspruchten Teile zu verringern. Das Bohrwerkzeug kann dadurch problemlos an verschiedenste Durchmesser und Längen angepaßt werden, da bei verschiedensten Durchmessern das Innengestänge gleich bleiben kann, so daß sich die Verhältnisse zwischen Bohrschaft und Hüllrohr nicht ändern. Ändert sich der Bohrer insofern hinsichtlich seines Durchmessers, so ist lediglich die Saughaube dem veränderten Bohrkopf anzupassen. Wird der Bohrer länger, muß lediglich das Hüllrohr verlängert werden, wobei das Rohr gegebenenfalls sogar einfach angestückelt werden kann. Da die Teile einfach zusammengefügt werden, sind Verschleißteile leicht austauschbar, oder kann das Bohrwerkzeug bei eventuellen Störungen, wenn z.B. infolge von Feuchtigkeit oder Nässe Verklumpungen des Bohrkleins auftreten, leicht demontiert werden. Da die Zentrierung nun unmittelbar am Bohrgestänge erfolgt, kann aber auch leicht eine Verschmutzung im Lagerbereich und eine komplizierte Luftführung vermieden werden, da sich die Saughaube nun nur noch im äußeren Bereich an den Bohrkopf geringfügig anlehnt, so daß die Luftführung zwischen Bohrkopf und Hüllrohr erleichtert ist.

Gemäß den Ansprüchen 6 und 7 sind die Zentriermittel zunächst so ausgebildet, daß sie bei der Rotation des Bohrkopfes nicht drehfest mit dem Bohrschaft verbunden sind. Da die Zentriermittel sich zudem am Bohrschaft selbst abstützen, werden sie axial nicht belastet. Die Ansaugöffnungen schneiden in eine Zentrierungsbohrung ein, so daß einerseits die reibungsbeanspruchte Anlagefläche des Zentrierbereichs verringert wird, andererseits ergibt sich dadurch eine Relativbewegung zwischen dem rotierenden Bohrschaft und dem Zentrierelement, so daß Verklumpungen in diesem Bereich wirksam begegnet werden kann.

Weitere Vorteile ergeben sich aus den Unteransprüchen.

Im folgenden wird die Erfindung anhand eines Ausführungsbeispieles näher erläutert. Es zeigen:
- Fig. 1: Das erfindungsgemäße Bohrwerkzeug,
- Fig. 2,3: das hintere Zentrierteil im Schnitt und in einer Ansicht aus Richtung des Bohrkopfes,
- Fig. 4: das Anschlußelement für die Saugmittel im Schnitt,
- Fig 5,6: das vordere Zentriermittel im Schnitt und in einer Ansicht aus Richtung des Bohrkopfs.

Das Bohrwerkzeug dient insbesondere für Bohrhämmer zum Bohren in Beton, Mauerwerk und dergleichen, wobei es mit einem bekannten Einsteckende 10 im Bohrhammer befestigbar ist. Als Antrieb für den Bohrhammer kommen hier grundsätzlich sämtliche Antriebsarten in Frage, wobei derartige Bohrhämmer meist als Handwerkzeuge eingesetzt werden.

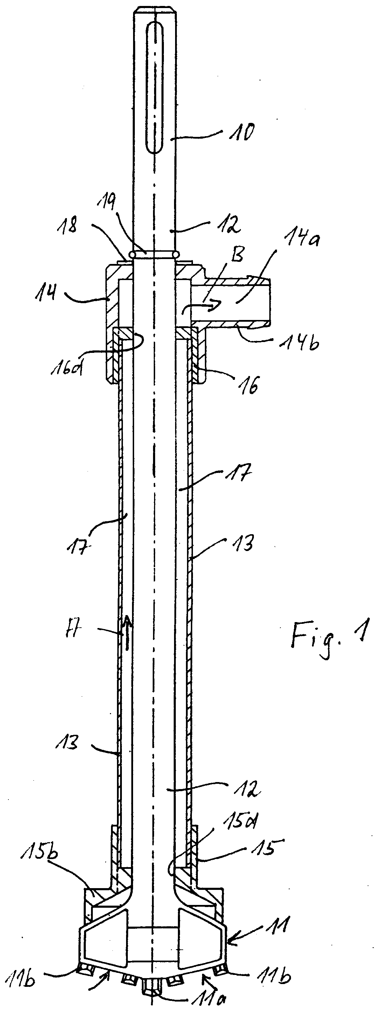

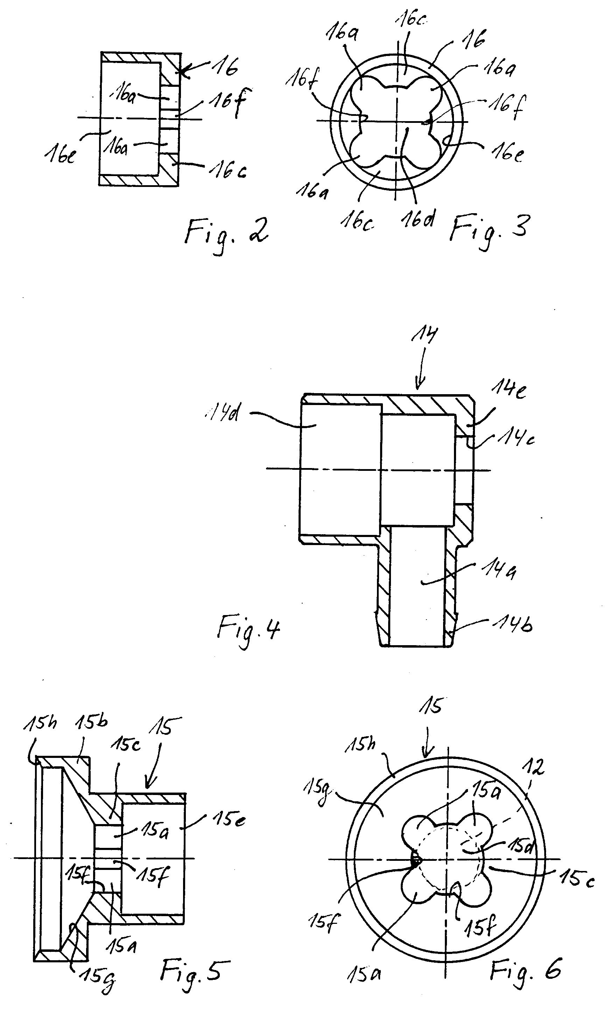

Gemäß Fig. 1 besitzt das Bohrwerkzeug einen Bohrkopf 11, der über einen Bohrschaft 12 mit dem Einsteckende 10 in Verbindung steht. Der Durchmesser des Bohrschaftes 12 ist kleiner als der Durchmesser des Bohrkopfes. Im Bereich der Handbohrhämmer sind meist bei einem Durchmesser von 40 mm bis 110 mm des Bohrkopfes Bohrschäfte von etwa 20 mm Durchmesser üblich. Das Bohrwerkzeug umfaßt ferner ein zum Bohrschaft koaxiales Hüllrohr 13, dessen Durchmesser kleiner ist als der des Bohrkopfes 11, jedoch größer als der des Bohrschaftes 12. Im einsteckseitigen Bereich des Hüllrohres ist ein mit dem Hüllrohr zusammenwirkendes Anschlußelement 14 vorgesehen, das für den Anschluß eines Saugmittels zur Absaugung von Bohrklein vorgesehen ist. Bohrkopfseitig ist das Hüllrohr 13 in ein Zentriermittel 15 eingesteckt, das in eine Saughaube 15b übergeht, deren Außendurchmesser kleiner als der Außendurchmesser des Bohrkopfes ist. Der Bohrkopf selbst verfügt über einen Zentrierstift 11a und über periphere Schneidelemente 11b.

Zwischen Hüllrohr 13 und Bohrschaft 12 wird durch die koaxiale Anordnung ein Raum 17 gebildet, durch den infolge des Anschlusses der Saugmittel am Saugstutzen 14b des Anschlußelements Bohrklein in Pfeilrichtung A,B abgesaugt wird. Der Raum 17 wird einsteckseitig durch das Anschlußelement nahezu verschlossen, wobei hier ein geringfügiger Lufteintritt infolge der dabei auftretenden Luftverwirbelung beim Austragen des Bohrkleins durchaus behilflich ist. Bohrkopfseitig steht der Raum 17 über Ansaugöffnungen 15a mit einem Ansaugbereich 15g in Verbindung.

Das Hüllrohr 13 ist vorzugsweise ein Rohr gleichbleibenden Durchmessers, vorzugsweise ein beliebig abgelängtes, normiertes Rohr, das an wenigstens zwei Zentriermitteln 15,16 zentriert ist und mit diesen Zentriermitteln zusammenfügbar ist. Das Hüllrohr kann jedoch auch mehrteilig sein, wobei die einzelnen Teile z.B. über Gewinde so verschraubt werden, daß Innen- und Außenwandung miteinander fluchten. Denkbar sind hier aber auch beliebige Verbindungen auch von Rohren mit verschiedenen Durchmessern. Das Hüllrohr 13 kann in die Zentriermittel 15,16 eintauchen wie dargestellt, oder diese auch übergreifen. Die Zentriermittel sind dabei unmittelbar am unveränderten Bohrschaft 12 selbst zentriert. Im Ausführungsbeispiel sind dabei zwei Zentriermittel, ein vorderes Zentriermittel 15 und ein hinteres Zentriermittel 16 vorgesehen, jedoch können bedarfsweise weitere Zentriermittel vorgesehen werden.

Das vordere Zentriermittel 15 geht in eine Saughaube 15b über. Im Ausführungsbeispiel sind vorderes Zentriermittel 15 und Saughaube 15b einstückig ausgebildet. Das hintere Zentriermittel 16 lagert das zum Bohrschaft 12 grundsätzlich ebenfalls koaxiale Anschlußelement 14, das über eine Querbohrung 14a in den Stutzen 14b zum Anschluß des Saugmittels übergeht. Im Ausführungsbeispiel sind hinteres Zentriermittel 16 und Anschlußelement aus zwei getrennten Teilen aufgebaut, wobei gemäß Fig. 4 das Zentrierelement 16 in einem Aufnahmebereich 14d aufgenommen ist, beide Teile können jedoch einstückig ausgebildet werden, wenngleich dann bei Verschleiß beide Teile gemeinsam auszutauschen sind. Das Anschlußelement verfügt über eine Durchtrittsbohrung 14c zum Durchtritt des Bohrschafts 12, wobei durch den Flansch 14e zugleich der Raum 17 einsteckseitig nahezu verschlossen wird.

Gemäß den Figuren 2 und 3 bzw. 5 und 6 ist sowohl das hintere Zentriermittel 16 als auch das vordere Zentriermittel 15 über Zentrierflansche 15c,16c am Bohrschaft zentriert, so daß das Hüllrohr 13 zuverlässig in den Schiebesitzen 15e,16e aufgenommen werden kann. Die Ansaugöffnungen 15a,16a sind im Bereich dieser Zentrierflansche 15c,16c angeordnet. Die Bohrungen der Ansaugöffnungen 15a,16a schneiden dabei in die Zentrierbohrung 15d,16d derart ein, daß unter Verringerung der Reibung zwischen Bohrschaft 12 und Zentriermittel der eigentliche Zentrierbereich 15f,16f verringert wird und andererseits der Abtransport von Bohrklein aufgrund der zwischen Zentriermittel und Bohrschaft 12 bestehenden Relativbewegung gefördert wird. In Fig. 6 ist diesbezüglich gestrichelt die Lage des Bohrschafts 12 angedeutet.

Aus Fig. 5 läßt sich deutlich der Aufbau des vorderen Zentriermittels 15 entnehmen. In den Schiebesitz 15e taucht das Hüllrohr 13 ein. Statt des Schiebesitzes kann auch z.B. ein Preßsitz o.ä. vorgesehen sein, sofern ein Zusammenfügen oder Zusammenstecken der Teile möglich ist. Mit dem Anlagebereich 15h erfolgt eine Anlage am Bohrkopf 11. Hinter dem Bohrkopf (vergl. Fig. 1) ist dann ein Ansaugbereich 15g im Bereich der Saughaube vorgesehen, durch den Bohrklein leicht abgeführt werden kann. Das Bohrklein gelangt dann über die Ansaugöffnungen 15a in den Raum 17. Zur axialen Festlegung des Anschlußelements 14 ist am Bohrschaft 12 ein Sicherungsring 19 und eine Scheibe 18 vorgesehen. Die Teile des Bohrwerkzeugs sind vorzugsweise metallisch ausgebildet, da sie somit verschleißärmer sind. Andererseits ist es aufgrund des Baukastenprinzips möglich, das Bohrwerkzeug aufgrund der vielfältigen Einsatzmöglichkeiten bei verschiedenen Bohrern, selbst bei teurerem Material für das Bohrwerkzeug selbst, preiswerter anzubieten, da weniger Elemente erforderlich sind, so daß z.B. leicht auf Kunststoffe verzichtet werden kann. Dies trägt aber zur besseren Ausnutzung bestehender Ressourcen bei.

## Patentansprüche

1. Bohrwerkzeug, insbesondere für Bohrhämmer zum Bohren in Beton, Mauerwerk und dergleichen mit
- einem Einsteckende (10) zum Einstecken des Bohrwerkzeugs in den Bohrhammer,
- einem Bohrkopf (11), der über einen Bohrschaft (12) mit dem Einsteckende (10) in Verbindung steht, wobei der Bohrschaft (12) einen kleineren Durchmesser als der Durchmesser des Bohrkopfs (11) aufweist,
- einem zum Bohrschaft (12) koaxialen Hüllrohr (13), dessen Durchmesser kleiner ist als der Durchmesser des Bohrkopfs (11) und größer als der Durchmesser des Bohrschafts (12) ist,
- einem im einsteckseitigen Bereich des Hüllrohrs (13) angeordneten, mit dem Hüllrohr zusammenwirkenden Anschlußelement (14) für den Anschluß eines Saugmittels,
wobei der zwischen Hüllrohr (13) und Bohrschaft (12) gebildete Raum (17) zum Absaugen von beim Bohren entstehenden Bohrklein mit dem bohrkopfseitigen Ende des Bohrwerkzeugs über Ansaugöffnungen (15a) in Verbindung steht und einsteckseitig nahezu verschlossen ist,
dadurch gekennzeichnet, daß das Hüllrohr (13) mit wenigstens zwei gesonderten Zentriermitteln (15,16) zur Zentrierung des Hüllrohrs (13) auf dem Bohrwerkzeug zusammenfügbar ist, die unmittelbar am unveränderten Bohrschaft selbst zentriert sind.

2. Bohrwerkzeug nach Anspruch 1, dadurch gekennzeichnet, daß das vordere Zentriermittel (15) in eine Saughaube (15b) übergeht, deren Außendurchmesser kleiner ist als der Außendurchmesser des Bohrkopfes (11).

3. Bohrwerkzeug nach Anspruch 2, dadurch gekennzeichnet, daß das vordere Zentriermittel (15) zugleich die Saughaube (15b) ist.

4. Bohrwerkzeug nach einem der vorhergehenden Ansprüche, dadurch gekennzeichnet, daß das hintere Zentriermittel (16) das zum Bohrschaft (12) koaxiale Anschlußelement (14) lagert, das über eine Querbohrung den Anschluß des Saugmittels an einem Stutzen (14b) ermöglicht und den zwischen Hüllrohr (13) und Bohrschaft (12) gebildeten Raum (17) einsteckseitig nahezu verschließt.

5. Bohrwerkzeug nach Anspruch 4, dadurch gekennzeichnet, daß das hintere Zentriermittel (16) zugleich das Anschlußelement ist.

6. Bohrwerkzeug nach einem der vorhergehenden Ansprüche, dadurch gekennzeichnet, daß die Zentriermittel (15,16) das Hüllrohr (13), das ein abgelängtes normiertes Rohr gleichbleibenden Durchmessers ist, nicht drehfest am Bohrschaft (12) über Zentrierflansche (15c,16c) zentrieren, in denen die Ansaugöffnungen (15a,16a) angeordnet sind.

7. Bohrwerkzeug nach einem der vorhergehenden Ansprüche, dadurch gekennzeichnet, daß die Ansaugöffnungen (15a,16a) in eine Zentrierbohrung (15d,16d) des Zentrierflansches (15c,16c) zur Zentrierung des Bohrschafts (12) einschneiden.

8. Bohrwerkzeug nach einem der vorhergehenden Ansprüche, dadurch gekennzeichnet, daß das metallische Hüllrohr (13) im Schiebesitz in die metallischen Zentriermittel (15,16) gesteckt ist.
